Europäisches Patentamt

European Patent Office

Office européen des brevets

(19)

(11) Numéro de publication: **0 153 215 B1**

(12) ## FASCICULE DE BREVET EUROPEEN

(45) Date de publication du fascicule du brevet:
**05.08.87**

(51) Int. Cl.⁴: **A 23 B 7/148, B 65 D 81/20**

(21) Numéro de dépôt: **85400152.6**

(22) Date de dépôt: **30.01.85**

(54) **Procédé de conservation de denrées alimentaires végétales périssables.**

(30) Priorité: **16.02.84 FR 8402324**

(43) Date de publication de la demande:
**28.08.85 Bulletin 85/35**

(45) Mention de la délivrance du brevet:
**05.08.87 Bulletin 87/32**

(84) Etats contractants désignés:
**AT BE CH DE FR GB IT LI LU NL SE**

(56) Documents cités:
FR - A - 562 117
FR - A - 811 849
FR - A - 2 198 700
FR - A - 2 225 095
FR - A - 2 483 361
GB - A - 483 309
US - A - 2 353 029
US - A - 3 773 527

FOOD TECHNOLOGY, vol. 34, no. 7, juillet 1980,
Institute of Food Technologies, Chicago, Illinois, US; A.
KRAMER et al.: "A gas-exchange process for extending
the shelf life of raw foods"

(73) Titulaire: **L'AIR LIQUIDE, SOCIETE ANONYME POUR
L'ETUDE ET L'EXPLOITATION DES PROCEDES
GEORGES CLAUDE, 75, Quai d'Orsay, F-75321 Paris
Cedex 07 (FR)**

(72) Inventeur: **Richardeau, Thierry, 2, Square Lavoisier Parc
Montaigne, F-78330 Fontenay-Le-Fleury (FR)**
Inventeur: **Drulhe-Aleman, Evelyne, Boîte Postale
No. 2 Les Loges-en-Josas, F-78330 Jouy-en-Josas (FR)**

(74) Mandataire: **Bouton Neuvy, Liliane et al, L'Air liquide,
Société Anonyme pour L'Etude et L'Exploitation des
Procédés Georges Claude 75, Quai d'Orsay,
F-75321 Paris Cedex 07 (FR)**

## Description

La présente invention concerne la conservation de denrées alimentaires végétales crues périssables sous atmosphère gazeuse contrôlée.

On entend par denrée alimentaire les végétaux du type tubercules, racines, à savoir pommes de terre, topinambours, betteraves, navets, carottes, céleri et semblables.

La commercialisation de pommes de terre épluchées crues se fait actuellement en emballage sous vide en présence d'un conservateur du type disulfite de sodium. La durée de conservation de tels tubercules est limitée à 10 jours, à 4°C, dans les circuits de distribution, en raison de l'apparition d'un brunissement et d'un ramollissement de la texture.

Le brevet britannique n° 2.059.248 préconise un traitement des pommes de terre au métabisulfite de sodium avant l'emballage sous vide et pasteurisation à 80-85°C.

D'autre part, le brevet britannique 1.268.560 fait état d'un emballage sous vide contenant une seule couche de pommes de terre. Une autre technique propose un emballage sous vide contenant une seule couche de pommes de terre et soumis à un chauffage sous pression.

On a recherché des conditions de conservation permettant d'augmenter la durée de vie du produit dans les circuits de distribution et de diminuer, voire supprimer l'emploi des conservateurs, en conditionnant la denrée végétale dans un emballage imperméable aux gaz et sous atmosphère gazeuse.

L'anhydride carbonique étant connu pour son effet bactériostatique inhibiteur, de la croisance de nombreux germes, on a songé à l'utiliser comme composant de l'atmosphère. Toutefois, sa grande solubilité ne permet pas son emploi en toutes proportions, mais réclame au contraire une recherche très sélective des quantités efficaces utilisées pour la denrée alimentaire concernée, afin d'éviter les problèmes de dissolution.

Et l'azote, introduit en complément de l'anhydride carbonique, assure une atmosphère inerte prévenant les oxydations.

On peut citer notamment la publication de Kramer dans Food Technology 34, pages 65-74 (1980) qui rappelle que des atmosphères d'azote et d'anhydride carbonique prolongent la vie des pommes de terre crues en rondelles; tout en préconisant l'emploi du monoxyde de carbone par rapport à l'anhydride carbonique et en montrant les effets bénéfiques des traitements complexes dans lesquels interviennent l'anhydride sulfureux, puis le monoxyde de carbone et/ou l'anhydride carbonique.

Le brevet français 2.198.700 fait mention d'un gaz inerte tel que l'azote, un mélange azote/oxygène, azote/anhydride carbonique ou azote/anhydride carbonique/oxygène, dans la conservation de produits agricoles à l'état frais, en particulier des fruits, légumes, fleurs, fourrages, rapidement périssables.

En outre, le brevet US 3.773.527 concerne la conservation des pommes de terre prépelées et cuites dans un conteneur scellé sous atmosphère gazeuse. Le mélange gazeux préféré contient de 30 à 70% d'anhydride carbonique et la balance en azote; les meilleurs résultats étant obtenus avec un mélange 50-50.

Selon le procédé de la présente demande pour conservation de denrées alimentaires végétales périssables du type tubercule ou racine, crues, épluchées, on introduit cette denrée dans un emballage imperméable aux gaz, fait le vide sur la denrée alimentaire ou on purge par exemple avec un gaz inerte, puis injecte un mélange gazeux constitué de 20 à 30% en volume d'anhydride carbonique pour ralentir le développement des germes et un complément de 70 à 80% en volume d'azote afin d'éviter les oxydations. Les mélanges à teneur d'environ 20% en volume d'anhydride carbonique et environ 80% d'azote conduisent à de très bons résultats.

Le procédé de conservation sous atmosphère gazeuse est applicable à la conservation de denrées alimentaires crues épluchées du type tubercule ou racine, lavées à l'eau saine, entières, découpées suivant une forme appropriée, à savoir cubes, tonnelets, tranches épaisses ou fines, bâtonnets ou même râpées. Ces denrées végétales crues épluchées sous atmosphère gazeuse peuvent être conditionnées en portions consommateurs sous film plastique, barquettes plastiques ou en vrac en conteneur étanche.

Le procédé de conditionnement est tel que le volume occupé par la denrée végétale: tubercule ou racine, peut atteindre les deux tiers du volume de l'emballage, le tiers restant étant occupé par le gaz.

Dans ces conditions spécifiques de conservation après vingt et un jours à +4°C, des pommes de terre présentent un aspect normal au point de vue couleur, odeur et texture.

Il est donné ci-après un exemple de réalisation du procédé proposé.

On place des pommes de terre Bintje, espèce fragile, crues épluchées sur une épaisseur de 2 à 5 mm, lavées dans de l'eau fraîche, dans des emballages thermosoudés en absence de tout conservateur. Avant scellement de l'emballage on fait le vide à l'intérieur du sac en film plastique suivi d'une injection de gaz.

Le film utilisé est un complexe plastique dont la perméabilité à l'oxygène est de l'ordre de 15 cc/m²/24 heures.

Le mélange gazeux injecté est composé de 20% d'anhydride carbonique et 80% d'azote.

Les pommes de terre occupent en volume les deux tiers de l'emballage et l'atmosphère gazeuse un tiers.

Dans ces conditions, après une conservation de 21 jours à 4°C, la couleur, l'odeur et la texture des pommes de terre sont parfaitement respectées.

De plus, contrairement à ce que l'on peut observer dans un conditionnement sous vide, la production d'acide lactique est très limitée.

Dans des conditions d'anaérobiose, on assiste à des fermentations conduisant à une production d'acide lactique qui en abaissant le pH favorise la conservation, mais qui en trop grande quantité nuit à l'aspect organoleptique.

L'anhydride carbonique a un effet inhibiteur sur le développement des germes, et la quantité d'acide lactique produite sous anhydride pur reste très faible, de l'ordre de 10 mg pour 100 g de pommes de terre après 21 jours.

Cependant, la dissolution de l'anhydride carbonique provoque un goût acide indésirable dans le cas de l'anhydride carbonique utilisé pur.

Sous vide ou sous gaz inerte, tel l'azote, la production d'acide lactique est intense — supérieure à 100 mg pour 100 g de pommes de terre en 21 jours — et provoque aussi un goût acide.

Un mélange contenant entre 20 et 30% d'anhydride carbonique et le complément en azote ralentit la production d'acide lactique et la limite à des valeurs favorisant la conservation sans nuire à l'aspect organoleptique.

L'évolution des teneurs en acide lactique exprimées en mg pour 100 g de pommes de terre, en fonction des atmosphères et de la durée de conservation, est consignée dans le tableau ci-dessous.

| Atmosphère<br>Durée<br>de conservation | $N_2$ | $N_2/CO_2$ 50/50 | $N_2/CO_2$ 80/20 | Vide | $CO_2$ |
|---|---|---|---|---|---|
| 14 jours | 42,0 | 32,5 | 51,6 | — | — |
| 21 jours | 103,2 | 59,0 | 64,0 | 82 | 14 |

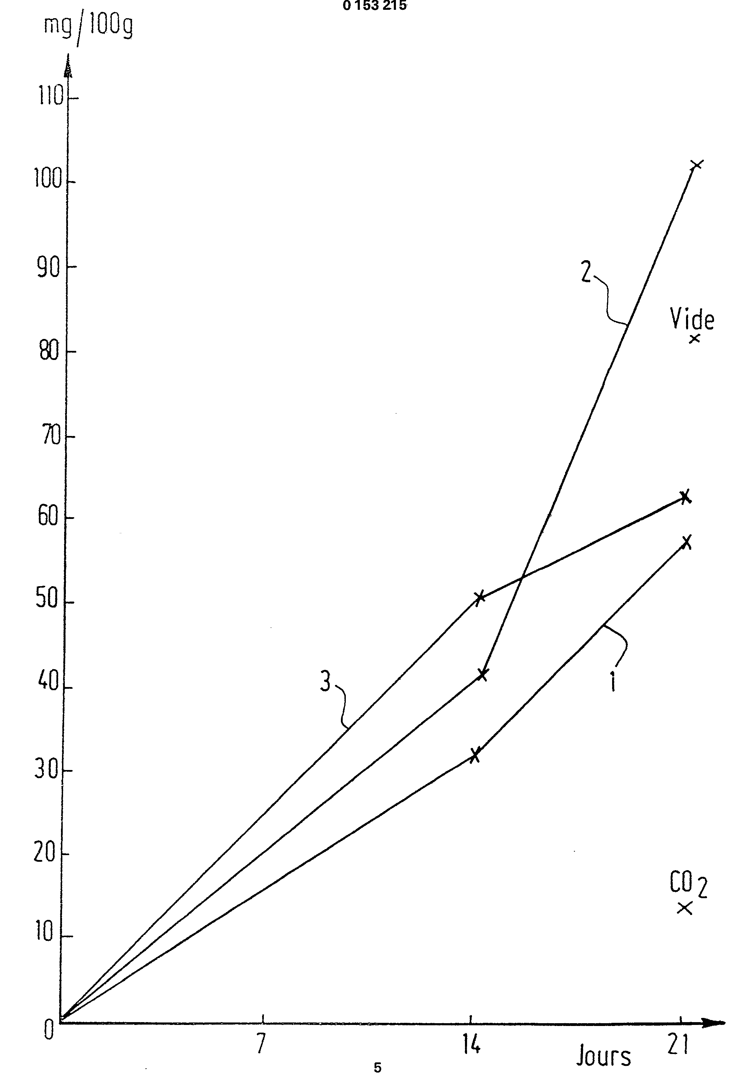

Cette évolution de la production d'acide lactique en fonction des conditions de conservation: type d'atmosphère et durée, apparaît sur la figure du dessin annexé. Les teneurs en acide lactique exprimées en mg pour 100 g de produit sont portées sur l'axe des ordonnées mg/100 g et les durées en jours sur l'axe des abscisses. Les points à la verticale d'une durée de 21 jours correspondent au vide et à l'anhydride carbonique pur. La couche (1) correspond au mélange 50/50 azote/anhydride carbonique, la courbe (2) à l'azote pur ($N_2$) et la courbe (3) au mélange 80/20 azote/anhydride carbonique.

**Revendications**

1. Procédé de conservation de denrées alimentaires végétales périssables, du type tubercule ou racine, crues épluchées selon lequel on introduit cette denrée alimentaire dans un emballage imperméable aux gaz, puis on fait le vide sur la denrée alimentaire, ou on purge et ensuite injecte un mélange gazeux binaire constitué par de l'anhydride carbonique et de l'azote, scelle l'emballage, caractérisé en ce que le mélange binaire a une teneur en anhydride carbonique comprise entre 20 et 30% en volume et en azote entre 70 et 80% en volume.

2. Procédé de conservation de denrées alimentaires périssables selon la revendication 1, caractérisé en ce que la teneur en anhydride carbonique est d'environ 20% en volume et la teneur en azote d'environ 80% en volume.

3. Application du procédé de conservation de denrées alimentaires végétales périssables selon la revendication 1 ou 2, à la conservation de denrées alimentaires crues épluchées du type tubercule ou racine, lavées, entières, découpées, suivant une forme appropriée ou râpées, présentées en portions consommateurs, barquettes plastiques ou conditionnées en vrac en conteneur.

**Patentansprüche**

1. Verfahren zur Konservierung leicht verderblicher pflanzlicher, roher geputzter Nahrungsmittel vom Knollen- oder Wurzeltyp, bei dem man dieses Nahrungsmittel in eine gasundurchlässige Verpackung einführt, dann über dem Nahrungsmittel evakuiert oder spült und sodann ein binäres Gasgemisch, das aus Kohlendioxid und Stickstoff besteht, einspritzt und die Verpackung versiegelt, dadurch gekennzeichnet, dass das binäre Gemisch einen Gehalt an Kohlendioxid zwischen 20 und 30 Vol.-% und an Stickstoff zwischen 70 und 80 Vol.-% hat.

2. Verfahren zum Konservieren leicht verderblicher Nahrungsmittel nach Anspruch 1, dadurch gekennzeichnet, dass der Gehalt an Kohlendioxid etwa 20 Vol.-% und der Gehalt an Stickstoff etwa 80 Vol.-% beträgt.

3. Anwendung des Verfahrens zum Konservieren leicht verderblicher pflanzlicher Nahrungsmittel nach Anspruch 1 oder 2 auf die Konservierung roher geputzter Nahrungsmittel vom Knollen- oder Wurzeltyp, gewaschen, ganz, zerschnitten, in geeigneter Form oder geraspelt, dargereicht in Verbraucherportionen, Kunststoffbehältern oder lose in einem Transportbehälter.

**Claims**

1. Process for preserving perishable vegetable crude peeled foodstuffs of the tuber or root type according to which one introduces said foodstuff into a gas impermeable package then one evacuates above the foodstuff or purges and then injects a binary gaseous mixture consisting of carbon dioxide and nitrogen and seals the package, characterized in that the binary mixture has a content of carbon dioxide between 20 and 30% by volume and of nitrogen between 70 and 80% by volume.

2. Process for preserving perishable foodstuffs according to Claim 1, characterized in that the content of carbon dioxide is about 20 percent by volume and the content of nitrogen is about 80% by volume.

3. Use of the process for preserving vegetable perishable foodstuffs according to Claim 1 or 2 for preserving raw peeled foodstuffs of the tuber or root type, washed, entire, cut, in a suitable form or rasped, presented as consumer portions, in plastic containers or loose in a container.